# EUROPÄISCHE PATENTSCHRIFT

(11) **EP 1 073 381 B1**
(45) Veröffentlichungstag und Bekanntmachung des Hinweises auf die Patenterteilung: **29.09.2004**
(21) Anmeldenummer: 99915431.3
(22) Anmeldetag: 26.04.1999
(51) Int. Cl.: A61C 8/00

(54) **VORRICHTUNG ZUR REKONSTRUKTION VON ZÄHNEN**
DEVICE FOR RECONSTRUCTING TEETH
DISPOSITIF DE RESTAURATION DENTAIRE

(30) Priorität: 27.04.1998 CH 94698
(43) Veröffentlichungstag der Anmeldung: 07.02.2001
(73) Patentinhaber: Brodbeck, Urs, 8703 Erlenbach (CH)
(72) Erfinder: Brodbeck, Urs, 8703 Erlenbach (CH)
(74) Vertreter: Rösler, Uwe, Dipl.-Phys.
(86) Internationale Anmeldenummer: PCT/CH1999/000168
(87) Internationale Veröffentlichungsnummer: WO 1999/055249

(56) Entgegenhaltungen:
- EP-A- 0 212 929
- EP-A- 0 477 644
- US-A- 4 424 037
- US-A- 5 205 745
- US-A- 5 685 714

## Beschreibung

Die vorliegende Erfindung betrifft eine Vorrichtung zur Rekonstruktion von Zähnen nach dem Implantatsprinzip gemäss Oberbegriff des Anspruches 1.

### Stand der Technik

Bei der Rekonstruktion von Zähnen nimmt die Implantat-Technik eine immer grösser werdende Bedeutung ein. In Würdigung der bekanntgewordenen Vorschläge stellt man fest, dass sich die technische Ausrichtung im Verlaufe der Jahre nicht wesentlich verändert hat. In einem chronologischen Abriss stellt man bei allen einschlägigen Druckschriften fest, dass diese Implantate stets auf einer mannigfachlich ausgestalteten Trägervorrichtung basieren, welche mit dem Kieferknochen verschiedentlich einverbunden ist, und im wesentlich aus einem Abutment besteht, das mit der Trägervorrichtung auf verschiedene Arten fixiert wird. Die Aussenform des Abutment bildet dann den Sitz des rekonstruierten Zahnes. Diese Implantatteile, welche nach Stand der Technik aus Titan oder einer Titanlegierung bestehen, weisen die verschiedensten Formen auf, wobei zwischen Trägervorrichtung und Abutment die unterschiedlichsten Verbindungsarten vorgeschlagen werden. Nachfolgende signifikante, zum Stand der Technik gehörende Druckschriften weisen auf die Vielgestaltigkeit der bekanntgewordenen Vorschläge hin. Hier sind statt vieler zu nennen:
US-4,854,872, US-4,872,839, US-5,082,442, US-5,152,687, EP-A9-0 477 644.
Bei allen hier aufgelisteten Vorschlägen lassen sich grundsätzliche Probleme der Implantat-Technik damit nicht lösen. Die Zahnkonfiguration eines jeden Menschen weist unterschiedliche Ausgestaltung in Form, geometrischer Ausdehnung sowie Stellung im Zahnbogen auf, weshalb es bei den bekanntgewordenen Implantaten regelmässig eine diffizile Anpassung im Bereich des zahnfleischseitigen Aufnahmesitzes des Abutment vorgenommen werden muss, soll der rekonstruierte Zahn individuell aus der von der Trägervorrichtung und vom Abutment vorgegebenen Ebene abweichen, oder die durch die Trägervorrichtung vorgegebene Wurzeldimensionierung verändern. Dabei lässt sich feststellen, dass das kommerzielle Angebot hierfür wenig Spielraum offenlässt, die gewünschten Anpassungen mit einem geringen Aufwand zu erstellen. Diese diffizile Anpassung besteht beispielsweise darin, die zahnfleischseitige Partie des Abutment, als Aufnahmesitz des zu rekonstruierenden Zahnes, so zu bearbeiten, dass daraus eine entsprechende Korrektur in Stellung und Form desselben resultiert. Es ist offensichtlich, dass eine solche Bearbeitung im eingebauten Zustand grosse visuelle und handwerkliche Anforderungen stellt: eine minimalste Abweichung bei der Bearbeitung wirkt sich unmittelbar negativ auf das Endprodukt aus. Korrekturen hierzu sind immer aufwendig, nicht selten entpuppen sie sich als Flickwerk.
Das Gesagte gilt auch für jene Vorschläge gemäss US-5,040,983, US-5,106,300, US-5,135,395, welche sich durch einen besonders anspruchsvollen strukturellen Aufbau zwischen Trägervorrichtung und Abutment auszeichnen.
Bei allen hier bekanntgewordenen Vorschlägen werden im wesentlichen zwei grundsätzliche Probleme nicht zufriedenstellend gelöst: Zum einen lässt sich feststellen, dass bereits bei minimalster Rückbildung des Zahnfleisches das Abutment sichtbar wird. Ersichtlich ist dies immer anhand eines dunklen linienförmigen Bogens oberhalb der Zahnfleischgrenze, was stets zu einer empfindlichen Beeinträchtigung des ästhetischen Bildes führt, womit die Akzeptanz bei den bekanntgewordenen Konzepten zunehmend zu wünschen lässt. Will man hiergegen eine sichere Abhilfe schaffen, so müsste der Uebergang zwischen Trägervorrichtung und Abutment bis tief ins Zahnfleisch verlegt werden, was aber nur möglich ist, wenn genügend Zahnfleisch vorhanden ist. Zum anderen erweist sich der sich unweigerlich bildende Spalt beim Uebergang zwischen Trägervorrichtung und Abutment sowie beim Uebergang zwischen Abutment und Implantat als äusserst anfällig auf eine bakterielle Besiedelung, was die Gefahr erhöht, dass in in kürzester Zeit zu einem dramatischen Zahnfleischschwund kommen kann, und somit den Erfolg der Rekonstruktion zu nichte macht. Hiergegen ist gemäss DE-A1-42 30 009 ein Vorschlag bekanntgeworden, der auf wesentliche Nachteile des vorgängig bekanntgewordenen Standes der Technik Abhilfe zu schaffen vermag. So ist eine Verbesserung aus diesem Vorschlag darin zu sehen, dass jeder Rekonstruktion ein individuelles oder normiertes Abutment zugrundegelegt wird, welches dann zu einer individuellen Retentionsform gegenüber dem rekonstruierten Zahn vorbereitet werden kann. Dabei besteht das Abutment selbst aus einem Metallkem mit einer Umhüllung, welche aus Keramik, aus einem Kunststoff oder Verbundwerkstoff besteht. Die vorzugsweise aus Keramik bestehehende Umhüllung reicht bis tief in den Verankerungsbereich des Abutment hinein, dergestalt, dass selbst bei einem drastischen Zahnfleischschwund der metallische endseitige Kern des Abutment bzw. die Trägervorrichtung nicht sichtbar werden sollte, so dass damit die Akzeptanz dieses Vorschlages gegenüber dem vorgängig bekanntgewordenen Stand der Technik sicher beträchtlich gesteigert werden konnte. Was mit diesem Vorschlag noch nicht zufriedenstellend behoben werden kann, betrifft den tief ins Zahnfleisch angesetzten Uebergang zwischen Trägervorrichtung aus Metall und Abutment: Dieser Uebergang, sei er noch so perfekt ausgearbeitet, bildet bakteriologisch immer einen Spalt, so dass daraus eine Anfälligkeit auf bakterielle Besiedelung immanent vorhanden ist. Ein aus ästhetischen Gründen möglichst tief im Zahnfleisch verlegten Spalt lässt sich mit konventionellen Reinungsmitteln nur sehr schwer erreichen. Die daraus entstehenden bakteriologischen Probleme sind zahnmedizinisch notorisch.

Aus den Druckschriften US-A-5,205,745, EP-A-0 212 929 und US-A-4,424,037 ist eine Vorrichtung zur Rekonstruktion von Zähnen nach dem Implantatsprinzip bekanntgeworden. Aus diesen Druckschriften geht hervor, dass eine einheitliche Unterkonstruktion vorgeschlagen wird, welche aus einem metallischen Kern und aus einer keramischen Umhüllung ausgebildet ist, wie dies insbesondere aus US-A-5,205,745, Spalte 3 und Fig. 1, oder aus EP-A-0 212 929, Anspruch 9 und Figur 2, oder aus US-A-4,424,037, Anspruch 1 und Fig. 1 hervorgeht. Eine weitergehende Lehre lässt sich aus diesen Druckschriften weder entnehmen noch ableiten, insbesondere kann aus diesen Druckschriften keine zufriedenstelle Geometrie entnommen oder abgeleitet werden, welche die Anforderungen und Erwartungen der heutigen Implantastechnik sei es ästhetisch, bearbeitungstechnisch oder implementativ zu erfüllen vermag.

Aus US-A-5,685,714 ist eine weitere Vorrichtung zur Rekonstruktion von Zähnen nach dem Implantatsprinzip bekanntgeworden. Diese Vorrichtung offenbart, dass der untere im Kieferknochen verankerbare Teil aus einem Metall besteht, und dass der obere Teil aus einem metallischen Kern mit einer Umhüllung aus einer Keramik aufgebaut ist. Auch hier gilt was oben bereits festgestellt worden ist, nämlich, dass die Anforderungen und Erwartungen der heutigen Implantatstechnik aus dieser Druckschrift weder zu entnehmen noch daraus abgeleitet werden können, womit die in dieser Druckschrift vorgeschlagene Technik in keiner Weise eine angemessene Akzeptanz zu entfalten vermag, weder ästhetisch, noch bearbeitungstechnisch, noch implementativ.

### Darstellung der Erfindung

Hier will die Erfindung Abhilfe schaffen. Der Erfindung, wie sie in den Ansprüchen gekennzeichnet werden, liegt die Aufgabe zugrunde, bei einer Vorrichtung der ein-gangs genannten Art ein umfassendes Konzept vorzuschlagen, bei welchem sämtliche einzel oder mehrfach wirkende Nachteile der zum Stand der Technik gehörenden Implantate behoben werden.

Erfindungsgemäss wird vorgeschlagen, die bis anhin durchwegs zur Anwendung kommenden Implantate, welche mindestens aus einem Trägerteil und aus einem auf diesem durch verschiedenartige Verbindungen verankerten Abutment bestehen, zu verlassen.

Die Erfindung schlägt grundsätzlich vor, Trägerteil und Abutment zu einer Einheit zu integrieren resp. zu verschmelzen. Diese Einheit erfüllt die Funktion einer Unterkonstruktion, wobei der untere Bereich die Funktion eines Trägerteils erfüllt, der obere Bereich übernimmt sämtliche Funktionen eines technologisch hochstehenden Abutment.

Die erfindungsgernässe Unterkonstruktion besteht sonach in ihrer Gesamtheit aus einem oberen Teil zur Ausgestaltung der Retentionsform und aus einem unteren Teil, der die Funktion eines Trägerteils erfüllt. Der Uebergang zwischen Retentionsform und Trägerteil wird durch einen konvex abgerundeten Auslauf gebildet, wobei der endseitige Kragen der Zahnkrone ebenfalls einen konvex abgerundeten Abschluss aufweist.
Auslauf des einen und Abschluss des anderen bilden zueinander im eingebauten Zustand einen kongruenten perfekten Sitz. Dieser Sitz zeichnet sich dadurch aus, dass er in maximierter Weise spalt- und absatzfrei gehalten wird, und dies nicht nur was die visuelle Wahrnehmung betrifft, sondern auch was die Bildung eines nach zahnmedizinischen Kriterien bakteriologisch gefährdeten Spaltes anbelangt.

Die erfindungsgemässe Unterkonstruktion zur Rekonstruktion von Zähnen hat einen metallischen Kern und aus einer vorzugsweise aus Keramik und/oder Komposit bestehenden Umhüllung. Die Wandstärke dieser Umhüllung wird auf ein Minimum reduziert. Der metallische Kern hat mehrere Funktionen zu erfüllen. Einerseits soll er als Trägermaterial der Umhüllung dienen, andererseits soll er bei Bedarf als Verankerung bei einer radial angebrachten mechanischen Verbindung zwischen rekonstruiertem Zahn und der darunter wirkenden Retentionsform dienen.

Erfindungsgemäss steht eine Ausführungsform im Vordergrunde, bei welcher der untere Bereich der Vorrichtung so präpariert ist, dass er im Kieferknochen verankert werden kann, sei es durch Pressitz, sei es durch Eingewindung. Welche dieser beiden Verankerungsarten zum Einsatz kommt, hängt vom spezifischen Fall ab. Die jeweils zum Einsatz gelangenden Verankerungsform dient nur der primären Stabilität, die für ein optimales Einteilen notwendig ist. Der obere Bereich lässt sich mannigfachlich als Aufnahmeform des rekonstruierten Zahnes ausbilden, wobei hier vorzugsweise eine Retentionsform als Formgebung zur Anwendung kommen wird.

Der wesentliche Vorteil der Erfindung ist darin zu sehen, dass nunmehr keine spaltbildende Verbindung mehr zwischen Trägerteil und Abutment vorhanden ist.

Der endseitige auslaufende Kragen des rekonstruierten Zahnes endet vorzugsweise unterhalb des Gingivakammes. Dies lässt sich gefahrenlos vorsehen, da die erfindungsgemässe aus einer Einheit bestehende Unterkonstruktion nunmehr keinen Spalt mehr aufweist. Da die ganze Unterkonstruktion äusserlich aus einer Keramik mit derselben Farbenstruktur wie die aufgesetzte Rekonstruktion besteht, lässt sich der endseitige Kragen des rekonstruierten Zahnes ohne weiteres auch oberhalb des Gingivakammes positionieren, denn der Uebergang ist aus vorgenannten Darlegungen visuell nicht feststellbar.

Vorteilhafte und zweckmässige Weiterbildungen der erfindungsgemässen Aufgabenlösung sind in den weiteren abhängigen Ansprüchen gekennzeichnet.

Im folgenden wird anhand der Zeichnungen Ausführungsbeispiele der Erfindung näher erläutert. Alle für das unmittelbare Verständnis der Erfindung nicht erforderlichen Elemente sind weggelassen worden. In den verschiedenen Figuren sind gleiche Elemente mit den gleichen Bezugszeichen versehen.

### Kurze Beschreibung der Zeichnungen

Es zeigt:
- Fig. 1: eine Vorrichtung zur Rekonstruktion von Zähnen, wobei der untere Teil durch Pressitz im Kieferknochen verankert ist,
- Fig. 2: eine Vorrichtung zur Rekonstruktion von Zähnen, wobei der untere Teil durch Gewinde im Kieferknochen verankert ist,
- Fig. 3: eine Vorrichtung zur Rekonstruktion von Zähnen, wobei der endseitige Kragen des rekonstruierten Zahnes oberhalb des Gingivakammes endet,
- Fig. 4 a-e: verschiedene Ausgangsformen von Vorrichtungen und
- Fig. 5 a+b: Vorrichtungen mit abgekröpften Oberteilen.

### Wege zur Ausführung der Erfindung

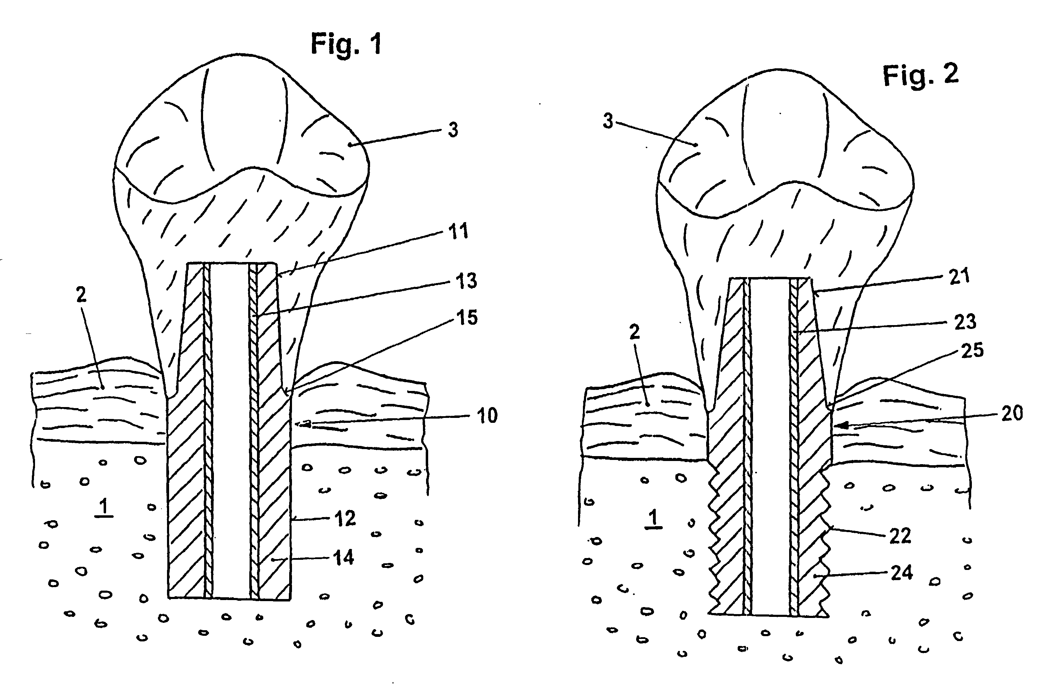

Fig. 1 zeigt eine aus einem Stück bestehende Unterkonstruktion 10, welche die Funktionen sowohl eines Trägerteils als auch eines Abutment erfüllt. Diese Untervorrichtung ist in sich eine Einheit, und besteht aus einem metallischen rohrförmigen Grundkörper oder Kern 13, vorzugsweise aus Titan oder einer Titanlegierung, und aus einer Umhüllung 14, welche ihrerseits aus einem Keramik- und/oder Kompositmaterial besteht. Ein unterer Teil dieser Unterkonstruktion 10 bildet den Trägerteil 12 und wird hier im Kieferknochen 1 durch Pressitz verankert. Ein oberer Teil bildet den Aufnahmesitz eines zu rekonstruierenden Zahnes 3, wobei dieser Sitz hier als Retentionsform 11 ausgebildet ist. Die Gingiva 2 wird operativ am Implantatort soweit vorbereitet, dass die Unterkonstruktion 10, d.h. deren Trägerteil 12, im Kieferknochen verankert werden kann. Eine genaue Positionierung des Trägerteils 12 ist Voraussetzung für das gute Gelingen der ganzen Rekonstruktion. Nach der Einheilphase ragt aus der Gingiva 2 im wesentlichen nur noch die Retentionsform 11 heraus, deren Uebergang 15 zum Trägerteil 12 durch die eingeheilte Gingiva 2 verdeckt wird.

Der Uebergang zwischen Retentionsform 11 und Trägerteil 12 wird durch einen konvex abgerundeten Auslauf gebildet, wobei der endseitige Kragen der Zahnkrone 3 ebenfalls durch einen konvex abgerundeten Abschluss gekennzeichnet ist. Auslauf der Retentionsform und Abschluss des endseitigen Kragens der Zahnkrone 3 bilden zueinander einen Sitz 15, der eine perfekte kongruente geometrische Form der beiden zusammenfügbaren Teile bildet. Dieser Sitz 15 zeichnet sich des weiteren dadurch aus, dass er maximiert spalt- und absatzfrei ausgebildet ist, und dies nicht nur was die visuelle Wahrnehmung betrifft, sondern auch was die Bildung eines nach zahnmedizinischen Kriterien bakteriologisch gefährdeten Spaltes anbelangt.

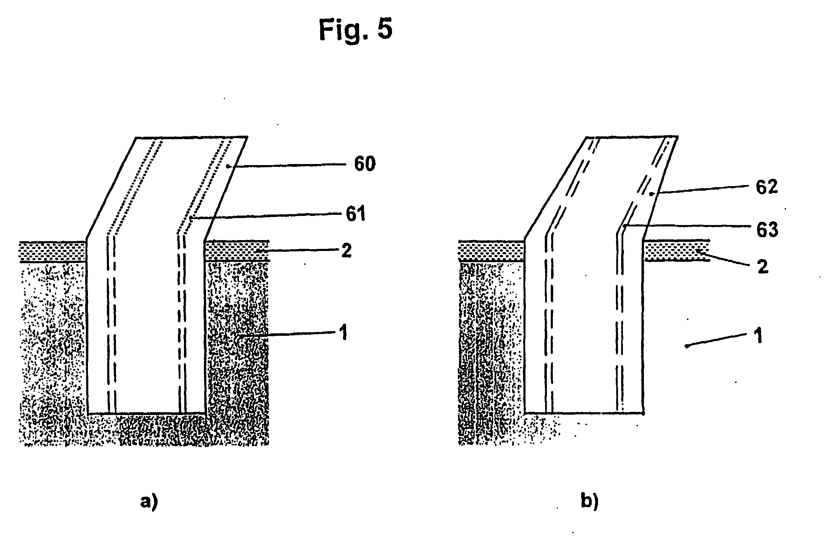

Die genannte Retentionsform 11 lässt sich leicht individuell präparieren, sei es durch eine korrektive Bearbeitung der Aussenfläche, sei es durch Aufsetzen einer ausrichtenden dünnen, nicht näher gezeigten Zentrierhülse, welche dann die neue Retentionsform bildet. In einem gewissen Rahmen lässt sich die Retentionsform 11 schief oder windschief gegenüber der ursprünglichen Ebene vorsehen (Vgl. Fig. 5) oder bearbeiten, womit sich jeweils eine form- und stellungsgerechte Optimierung bei der Zahnrekonstruktion erzielen lässt, wobei dies insbesondere dann immer angezeigt ist, wenn die Rekonstruktion zwischen zwei gesunden Zähnen durchgeführt werden soll. Mit dem Einsetzen und Verankern des rekonstruierten Zahnes 3 auf die Retentionsform 11 gilt die Rekonstruktion als abgeschlossen. Soweit die Retentionsform 11 keinen selbsthemmenden Verlauf aufweist, lässt sich die Fixierung zwischen Oberfläche der Retentionsform 11 und Kaverne der Rekonstruktion 3 durch einen Klebstoff bewerkstelligen. Selbstverständlich lässt sich die Fixierung der Rekonstruktion 3 mit der darunter liegenden Unterkonstruktion 10 mittels einer lösbaren Verbindung, bespielsweise einer Schraube oder eines Stiftes erzielen, welche oberseitig der Gingiva 2 angebracht werden kann, und welche mit dem metallischen Kern 13 radial verankert wird. Eine beispielsweise von aussen, radial durch die Rekonstruktion 3 eingebrachte Schraube lässt sich dann leicht durch einen Verschlusseinsatz aus einem gleichen Material wie die Rekonstruktion 3 selbst verdecken. Die letztaufgeführte Befestigungsvariante wird nicht näher dargestellt, da sie dem Fachmann ohne weiteres bekannt ist.

Selbst wenn eine drastische Verschlechterung des Gesundheitszustandes der Gingiva 2 zu einem Zahnfleischschwund führt, entsteht durch die hier beschriebene Rekonstruktion keine Beeinträchtigung des äusseren ästhetischen Zahnbildes, also ist sonach kein gingivaler Durchtritt zu befürchten, denn die Umhüllung 14 der Vorrichtung 10 weist durchwegs dieselbe farbige Struktur wie die Zahnkrone 3 auf. Dies gilt insbesondere dann, wenn der Zahnfleischwund bis unterhalb des auslaufenden Kragen des rekonstruierten Zahnes 3 im Bereich des Sitzes 15 vorangeschritten ist. Wie die Figur sehr gut hervorheben will, wird der untere Kragen des rekonstruierten Zahnes 3 spalt- und absatzfrei gegenüber dem sitzbildenden Uebergang zwischen Retentionsform und Trägerteil ausgebildet. Eine allfällige vorhandene Trennungslinie lässt sich visuell nicht feststellen, da die beiden Rekonstruktionselemente dieselbe Farbstruktur aufweisen. Immerhin lässt sich mit dem erfindungsgemässen Vorschlag bei einem drastische Zahnfleischschwund jederzeit auf einfachste Art und Weise Remedur schaffen, indem sich ohne Zerstörung der Unterkonstruktion 10 eine neue angepasste Zahnkrone 3 aufsetzen lässt, wodurch eine hohe Retrofit-Fähigkeit dieser Rekonstruktion auszumachen ist.

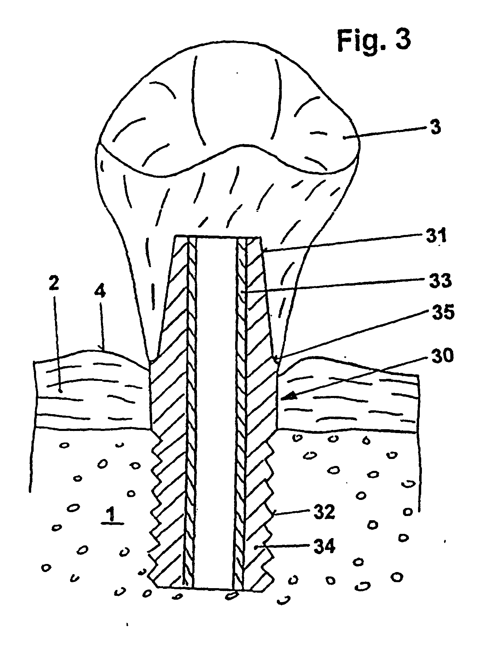

Fig. 2 unterscheidet sich gegenüber Fig. 1 lediglich dadurch, dass der Trägerteil 22 der Unterkonstruktion 20 mit einem Gewinde versehenen ist, der im Kieferknochen 1 eingewindet wird. Die Figur entspricht des weiteren der Ausgestaltung gemäss Fig. 1.

Fig. 3 entspricht, was den Aufbau der Unterkonstruktion 30 und des rekonstruierten Zahnes 3 betrifft, der Fig. 2. Ein Unterschied besteht hier darin, dass der Sitz 35, der dem Sitz 15 aus Fig. 1 entspricht, oberhalb des Gingivakammes 4 gehalten wird. Ein Abbruch des ästhetischen Bildes ist hier, wie die Ausführungen unter Fig. 1 darlegen, nicht zu befürchten.

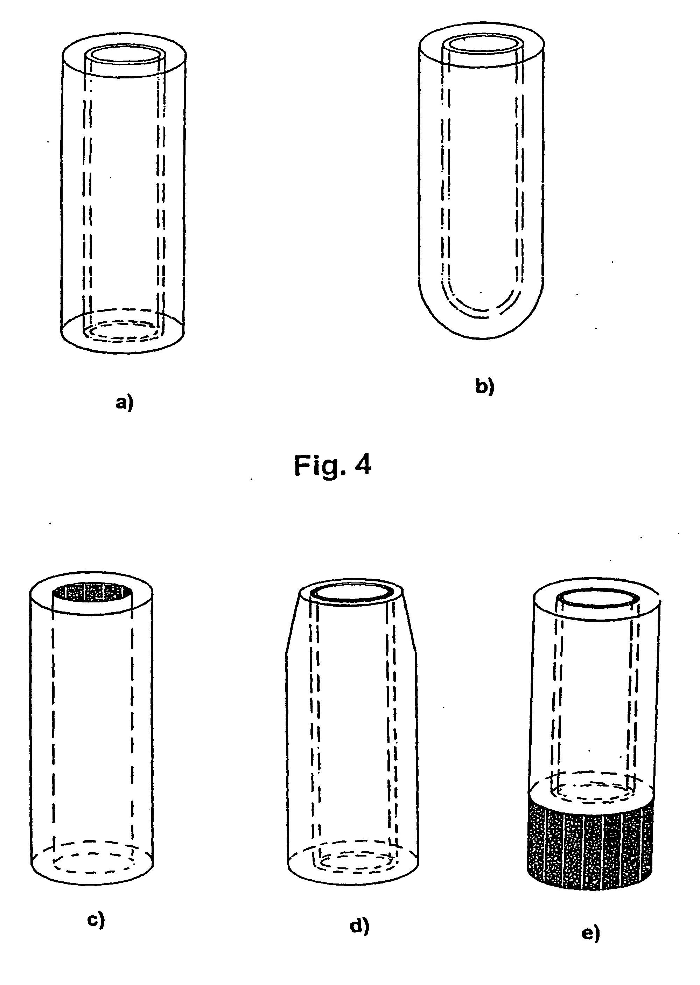

Fig. 4 zeigt verschieden aufgebauten Unterkonstruktionen im einbaufertigen Zustand.
Die Unterkonstruktion nach Fig. 4 a) ist zylindrisch gehalten mit einen rohrförmigen Metallzylinder. Diese Form eignet sich gut in jenen Fällen, bei welchen die Retentionsform im Nachgang erstellt werden soll.
Fig. 4b) ist ähnlich aufgebaut wie bei Fig. 4a), wird aber unterseitig durch eine Rundung abgeschlossen. Sie eignet sich gut in jenen Fällen, bei welchen der Einbau im Kieferknochen durch Pressitz vorgesehen wird.
Fig. 4c) zeigt wiederum eine zylindrische Unterkonstruktion, wobei hier einen vollen Metallkern vorgesehen wird.
Bei Fig. 4d) ist die Unterkonstruktion ähnlich gehalten wie in Fig. 4a), wobei hier aber die Retentionsform bereits vorgegeben ist.
bei Fig. 4 e) handelt es sich um eine zusammengesetzte Unterkonstruktion, in dem Sinne, als ein Teil der im Kieferknochen verankerte Partie aus Metall besteht, und wechselweise mit einem Gewinde versehen werden kann.
Die glatten Unterkonstruktionen eignen sich gut im Kieferknochen als Pressitz zu fungieren. Sie können ohne weiteres im unteren Teil mit einem Gewinde versehen werden.

Fig. 5 zeigt zwei weitere spezielle Unterkonstruktionen:
Fig. 5 a) weist eine Abkröpfung auf, bei welcher der Metallkern 61 parallel zur Umhüllung 60 verläuft.
In Fig. 5 b) verlaufen die beiden Bestandteile 62, 63 der Unterkonstruktion trapezoid zueinander.
Eine solche abgekröpfte Unterkonstruktion kommt immer dort zum Einsatz, wo es darum geht, eine schiefe oder windschiefe Rekonstruktion zu bewerkstelligen.

### Bezugszeichenliste

- 1: Kieferknochen
- 2: Gingiva
- 3: Rekonstruierter Zahn, Zahnkrone
- 4: Gingivakamm
- 10: Unterkonstruktion
- 11: Oberer Teil der Unterkonstruktion, Retentionsform
- 12: Unterer Teil der Unterkonstruktion, Trägerteil als Pressitz ausgebildet
- 13: Rohrförmiger Metallkem
- 14: Umhüllung aus Keramik oder aus einem Kompositmaterial
- 15: Sitz
- 20: Unterkonstruktion
- 21: Oberer Teil der Unterkonstruktion, Retentionsform
- 22: Unterer Teil der Unterkonstruktion, Trägerteil mit Gewinde
- 23: Rohrförmiger Metallkern
- 24: Umhüllung aus Keramik oder aus einem Kompositmaterial
- 25: Sitz
- 30: Unterkonstruktion
- 31: Oberer Teil der Unterkonstruktion, Retentionsform
- 32: Unterer Teil der Unterkonstruktion, Trägerteil mit Gewinde
- 33: Rohrförmiger Metallkern
- 34: Umhüllung aus Keramik oder aus einem Kompositmaterial
- 35: Sitz
- 60: Umhüllung
- 61: Metallkem
- 62: Umhüllung
- 63: Metallkem

## Patentansprüche

1. Vorrichtung zur Rekonstruktion von Zähnen nach dem Implantatsprinzip, wobei die Vorrichtung aus einer einheitlichen Unterkonstruktion(10, 20, 30) besteht, mit einem unteren im Kieferknochen (1) verankerbaren Teil, und mit einem oberen im gingivalen Bereich als Aufnahme für den rekonstruierten Zahn (3) dienenden Teil, wobei der untere im Kieferknochen verankerbare Teil aus einem Metall besteht, und wobei der obere Teil aus einem metallischen Kern (13, 23, 33) mit einer Umhüllung (14, 24, 34) aus einer Keramik und/oder einem Kompositmaterial aufgebaut ist, wobei der obere Teil der Unterkonstruktion als Retentionsform ausgebildet ist,
**dadurch gekennzeichnet, dass** die Unterkonstruktion einteilig als Einheit ausgebildet ist.

2. Vorrichtung nach Anspruch 1,
**dadurch gekennzeichnet, dass** der endseitige untere Auslauf der Retentionsform und ein unterer Abschluss des rekonstruierten Zahnes zueinander einen kongruenten Sitz bilden.

3. Vorrichtung nach Anspruch 2,
**dadurch gekennzeichnet, dass** der Sitz (15, 25, 35) unterhalb des Gingivakammes (4) angesetzt ist.

4. Vorrichtung nach Anspruch 2 oder 3,
**dadurch gekennzeichnet, dass** der Sitz (15, 25, 35) einen konvex verlaufenden Abschluss bildet.

5. Vorrichtung nach einem der Ansprüche 1 bis 4,
**dadurch gekennzeichnet, dass** der untere im Kieferknochen verankerbare Teil der Unterkonstruktion mit einem Gewinde (22, 32) versehen ist.

6. Vorrichtung nach einem der Ansprüche 1 bis 5,
**dadurch gekennzeichnet, dass** der untere im Kieferknochen verankerbare Teil der Unterkonstruktion presssitz tauglich ist.

7. Vorrichtung nach einem der Ansprüche 1 bis 6,
**dadurch gekennzeichnet, dass** mindestens der obere metallische Kern der Unterkonstruktion rohrförmig oder als Vollkörper ausgebildet ist.

## Claims

1. Device for reconstructing teeth in accordance with the implantation principle, with the device consisting of a uniform s ubstructure (10, 20, 3 0), including a lower part adapted to be anchored in the jaw bone (1) and an upper part serving as element receiving the reconstructed tooth (3) in the gingival area, wherein said lower part adapted to be anchored in the jaw bone consists of a metal and wherein the upper part consists of a metal core (13, 23, 33) with an envelope (14, 24, 34) made of a ceramic and/or a compound material, wherein said upper part of said substructure is configured as a retention mould,
**characterised in that** said substructure is configured in one piece as a single unit.

2. Device according to Claim 1,
**characterised in that** the lower discharge zone of said retention mould on the terminal side and a lower termination of the reconstructed tooth cooperate to form a congruent seat.

3. Device according to Claim 2,
**characterised in that** said seat (15, 25, 35) is attached below the gingival crest.

4. Device according to Claim 2 or 3,
**characterised in that** said seat (15, 25, 35) constitutes a terminal part of convex extension.

5. Device according to any of the Claims 1 to 4,
**characterised in that** said lower part of said substructure, which is adapted to be anchored in the jaw bone, is provided with a thread (22, 32).

6. Device according to any of the Claims 1 to 5,
**characterised in that** said lower part of said substructure, which is adapted to be anchored in the jaw bone, is suitable for heavy-force fitting.

7. Device according to any of the Claims 1 to 6,
**characterised in that** at least the upper metal core of said substructure is designed as tubular body or as a solid body.

## Revendications

1. Dispositif à reconstruire des dents selon le principe d'implantation, à un élément constitué par une base homogène (10, 20, 30), muni d'une partie inférieure apte à être ancrée dans l'os maxillaire (1) et une partie supérieure servant en tant que l'élément recevant la dent reconstruite (3) dans la zone gingivale, dans lequel ladite partie inférieure apte à être ancrée dans l'os maxillaire consiste en un métal et dans lequel la partie supérieure consiste en une âme métallique (13, 23, 33) à une chemise (14, 24, 34) faite en un matériau céramique et/ou composite, dans lequel ladite partie supérieure de ladite base est conçue sous forme d'un moule de rétentation,
**caractérisé en ce que** ladite base is configured in one piece as a single unit.

2. Dispositif selon la revendication 1,
**caractérisé en ce que** la zone de décharge inférieure dudit moule de rétention du côté terminal et de la dent reconstruite on the terminal side and a lower termination of the reconstructed tooth cooperate to form a congruent seat.

3. Dispositif selon la revendication 2,
**caractérisé en ce que** said seat (15, 25, 35) is attached below the gingival crest.

4. Dispositif selon la revendication 2 or 3,
**caractérisé en ce que** said seat (15, 25, 35) constitutes a terminal part of convex extension.

5. Dispositif selon une quelconque des revendications 1 à 4,
**caractérisé en ce que** said partie inférieure of ladite base, which is apte à être ancrée dans l'os maxillaire, is provided with a thread (22, 32).

6. Dispositif selon une quelconque des revendications 1 à 5,
**caractérisé en ce que** said partie inférieure of ladite base, which is apte à être ancrée dans l'os maxillaire, is suitable for a presssitz.

7. Dispositif selon une quelconque des revendications 1 à 6,
**caractérisé en ce que** at least the upper metal core of ladite base is designed as tubular body or as a solid body.
